# EUROPEAN PATENT APPLICATION

(11) **EP 3 300 383 A1**
(43) Date of publication of application: **28.03.2018**
(21) Application number: 16190611.0
(22) Date of filing: 26.09.2016
(51) Int. Cl.: H04N 21/854, H04N 21/4402, H04N 21/845, H04N 21/472, H04N 21/81

(54) **METHOD FOR CONVERTING A SLIDESHOW INTO A VIDEO**

(71) Applicant: TP Vision Holding B.V., 1097 JB Amsterdam (NL)
(72) Inventor: VAN LEUVEN, Sebastian, 9052 Flanders (BE)
(74) Representative: Cohausz & Florack

(57) **Abstract**

A method for converting a slideshow into a video is implemented by a processing unit (102), and includes the steps of: receiving a slideshow that includes at least one slide including at least one preset dynamic operation which, when activated, implements presentation of visual feedback on the slide; identifying an end state of the slide, the end state indicating a state in which the presentation of visual feedback on the slide has been completed; encoding an image of the end state of the slide, and storing the image thus encoded as an end frame, the end frame being an intra frame; and generating a video container file (400) to include data regarding at least the end frame.

## Description

The disclosure relates to a method for converting a slideshow into a video.

In order to facilitate storage of digital video data in a computer, a specific video container file format may be utilized so as to store video data as a video container file and to allow the computer to play the video container file. Various video container file formats are currently available, such as Matroska (.mkv), MPEG-4 part 14 (.mp4), AVI (.avi), QuickTime File Format (.mov), etc.

For the purpose of reducing the overall file size of a video container file, the video data contained in the video container file is typically compressed. Conventionally, a number of video compression techniques exist, utilizing standards such as ITU-T Rec. H.264|ISO/IEC 14496-10 and ITU-T Rec. H.265|ISO/IEC 23008-2.

It is noted that there may be need for converting a slideshow (e.g., in Microsoft® PowerPoint format), which might not be properly read by all computers, into a video container file. In a slideshow, a number of visual feedbacks may be incorporated to be triggered by operation of a user. For example, visual elements, such as text, pictures and/or animation may appear/disappear in response to an operation by the user (e.g., a mouse click, keystroke, etc.).

An object of the disclosure is to provide a method that is capable of converting a slideshow into a video.

According to one embodiment of the disclosure, the method is implemented by a processing unit. The method includes the steps of:
receiving a slideshow that includes at least one slide, the at least one slide including at least one preset dynamic operation which, when activated, implements presentation of visual feedback on the at least one slide;
identifying an end state of the at least one slide, the end state indicating a state in which the presentation of visual feedback on the at least one slide has been completed;
encoding an image of the end state of the at least one slide, and storing the image thus encoded as an end frame, the end frame being an intra frame; and
generating a video container file corresponding to the video, the video container file including data regarding at least the end frame.

Other features and advantages of the disclosure will become apparent in the following detailed description of the embodiments with reference to the accompanying drawings, of which:
Figure 1 is a block diagram of a computing device coupled to a client-end electronic device for receiving a slideshow therefrom according to one embodiment of the disclosure;
Figure 2 is a flow chart illustrating steps of a method for converting the slideshow into a video according to one embodiment of the disclosure;
Figure 3 illustrates an exemplary slide including a plurality of different states;
Figure 4 illustrates an exemplary video container file generated by a processing unit of the computing device according to one embodiment of the disclosure;
Figure 5 illustrates a slide box element of the video container file according to one embodiment of the disclosure;
Figure 6 illustrates an exemplary operation interface of a remote controller used for inputting various user control operation to interact with the video container file; and
Figures 7 and 8 illustrate various user control operations that may be inputted, and the responses by the video container file.

Before the disclosure is described in greater detail, it should be noted that where considered appropriate, reference numerals or terminal portions of reference numerals have been repeated among the figures to indicate corresponding or analogous elements, which may optionally have similar characteristics.

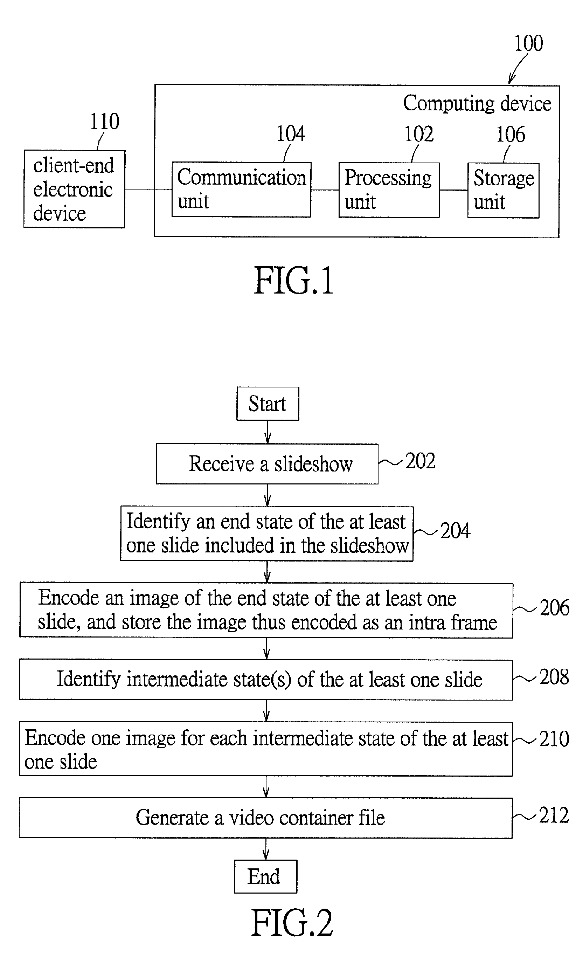

Figure 1 is a block diagram illustrating a computing device 100 according to one embodiment of the disclosure. In this embodiment, the computing device 100 is embodied using a server, and includes a processing unit 102, and a communication unit 104 and a storage unit 106 that are coupled to the processing unit 102. The communication unit 104 may be configured to communicate with one or more electronic device(s) via a network (e.g., the Internet).

The storage unit 106 may be embodied using a physical storage device such as a hard disk drive (HDD), a solid state drive (SSD), etc. In this embodiment, the storage unit 106 stores a software application including instructions which, when executed by the processing unit 102, cause the processing unit 102 to execute specific operations.

Figure 2 illustrates steps of a method for converting a slideshow into a video container file according to one embodiment of the disclosure.

In step 202, the server 100 receives a slideshow. Specifically, in this embodiment, the communication unit 104 of the server 100 is in communication with a client-end electronic device 110 via a network (see Figure 1) . When it is desired for a user of the client-end electronic device 110 to convert the slideshow, which the client-end electronic device 110 may not be able to properly decode and display, into a video container file, the client-end electronic device 110 may transmit the slideshow to the server 100.

In this embodiment, the slideshow may be in the Microsoft® PowerPoint (.ppt) format. The slideshow includes at least one slide, and the at least one slide includes at least one preset dynamic operation. When activated, the at least one preset dynamic operation implements presentation of visual feedback on the at least one slide. For example, visual elements such as text, pictures and/or animation may appear/disappear in response to an operation by the user (e.g., a mouse click, keystroke, etc.).

In response to receipt of the slideshow via the communication unit 104, the processing unit 102 executes a software application stored in the storage unit 106, in an attempt to convert the slideshow into a video container file.

In step 204, the processing unit 102 identifies an end state of the at least one slide included in the slideshow. It is noted that in various embodiments of the disclosure, the term "end state" indicates a state of the at least one slide in which the presentation of visual feedback on the at least one slide has been completed.

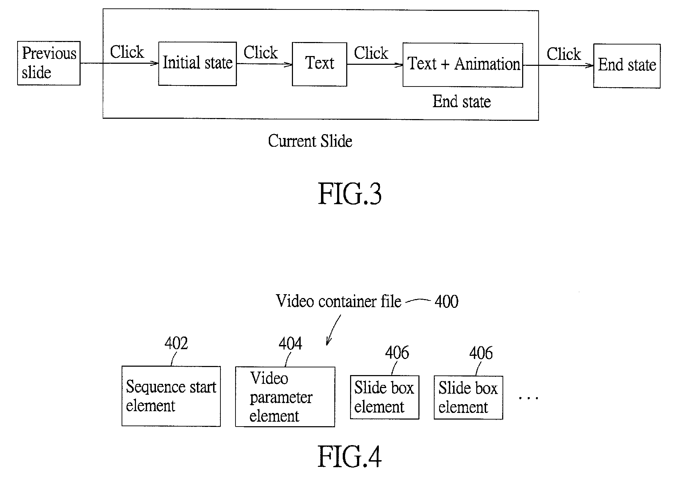

Figure 3 illustrates one of multiple slides of an exemplary slideshow (referred to as a current slide) having multiple presentations of visual feedback incorporated therein. When the slideshow is executed by a proper application (e.g., Microsoft® PowerPoint), in response to a user control operation, such as one mouse click, the current slide changes from an initial state (e.g., with nothing being displayed) to a middle state (with text appearing). In response to another user control operation, such as one mouse click, the current slide changes from the middle state to the end state, in which the text stays displayed and an animation is played. It is noted that, an image of the end state of the at least one slide resembles a screenshot of the at least one slide after all presentation (s) of visual feedback thereon has been completed.

In step 206, the processing unit 102 encodes the image of the end state of the at least one slide, and stores the image thus encoded as an end frame. Herein, the end frame is encoded as an intra frame.

In various embodiments of the disclosure, the term "intra frame", "I-frame" or "intra-predicted frame" indicates that the image is encoded as a standalone frame without reference to pixel data of adjacent frames (therefore known as intra prediction). That is to say, all information regarding the image is contained in the intra frame, such that when it is to decode the intra frame, no reference from other frames is required by a decoding module.

An intra frame may be obtained using various encoding techniques. For example, when the image of the end state of the at least one slide is encoded using H.264 standard, the image may be stored as an instantaneous decoding refresh (IDR) frame. When the image of the end state of the at least one slide is encoded using H.265 standard, the image may be stored as an intra random access point (IRAP) frame. These types of video frames are known to flush the decoder buffer state.

On the other hand, when an image is encoded and stored as an "inter frame", or also known as an "inter-predicted frame", the information referring to other frames is stored. For example, a block matching algorithm may be employed to locate parts of other frames that are similar to that of the image, and when a matching for a part (referred to as a block) of the image is found in another one of the frames, such block is encoded using a vector pointing to the matching block of the another one of the frames. In this manner, the image may be encoded for less storage space, but in decoding the image, data from other frames is required.

It is noted that, when the slideshow contains a plurality of slides, encoding the image of the end state of each of the slides as an intra frame may allow certain user operations to be performed faster (e.g., to jump back and forth between the end states of slides).

The processing unit 102 identifies, in step 208, all intermediate state of the at least one slide (occurring prior to the end state), and encodes, in step 210, one image for each intermediate state of the at least one slide thus identified. One slide may have one or more than one intermediate states, which may include the initial state, and states associated with completion of presentations of visual feedback other than the very last one (that is, presentation of the slideshow halts at each of the intermediate states, and does not progress without a respective user control operation). Taking the slide shown in Figure 3 as an example, this slide includes two intermediate states, including the initial state and the middle state. In other embodiments, other arbitrary states may be selected to be intermediate states, such that a resulting video container file may be streamed (played) to the "build-up" of the slide.

Afterward, the processing unit 102 stores the images thus encoded as intermediate frames. It is noted that, each of the images encoded in step 210 may be encoded and stored as either an intra frame or an inter frame.

In step 212, the processing unit 102 generates a video container file. The video container file includes data regarding the end frame and other frames, such as the intermediate frames.

Figure 4 illustrates an exemplary video container file 400 according to one embodiment of the disclosure.

The video container file 400 includes a number of main elements. Specifically, the video container file 400 includes a sequence start element 402 that contains system layer information, a video parameter element 404 that contains a number of video parameter sets associated with a decoding process of the video container file 400; and at least one slide box element 406 corresponding to the at least one slide and containing the end frame.

The system layer information contained in the sequence start element 402 may include flags that indicate whether certain options in the slide box element 406 are allowed. For example, in this embodiment, the system layer information includes a commentary flag indicating whether a commentary is allowed to be incorporated, a transition flag indicating whether a transition operation is allowed to be incorporated, a maximum scale factor allowed for upscaling a video corresponding to the video container file 400 in case the video has a lower resolution than a display device for displaying the video, and a list of allowed control operations associated with control of playback of the video. The number of entries in the above list may be included as well.

The video parameter sets contained in the video parameter element 404 includes a video parameter set (VPS), a sequence parameter set (SPS), and a picture parameter set (PPS).

It is noted that, when a plurality of slides exist in the slideshow, the video container file 400 thus generated may include a plurality of slide box elements 406, each corresponding to a respective one of the slides.

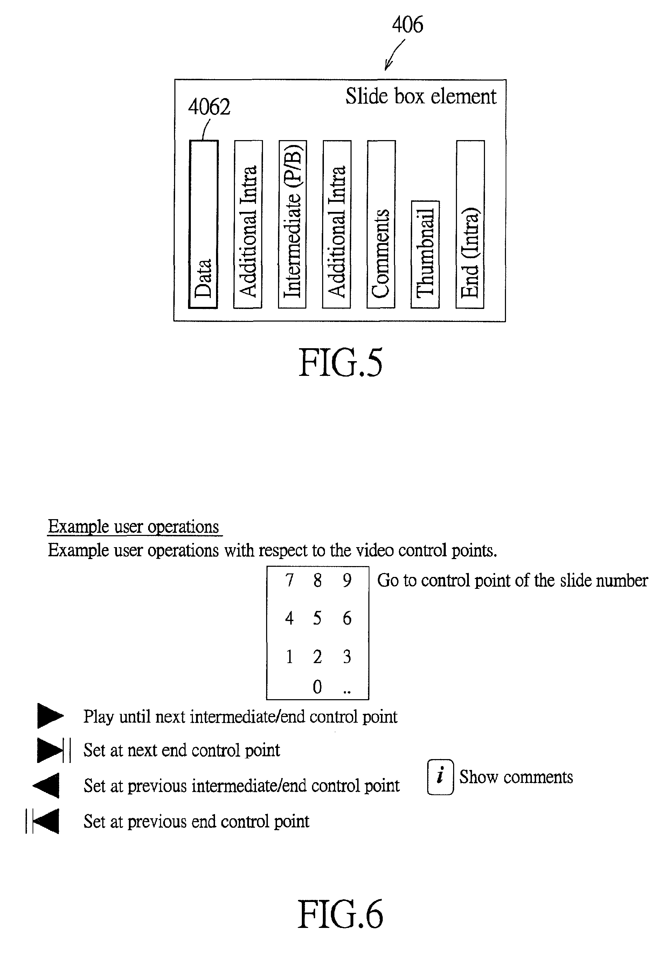

Referring to Figure 5, the slide box element 406 may include a data section 4062, and a list of video frames corresponding to the respective slide (e.g., the end frame), each associated with one particular state of the respective slide. In this embodiment, the video frames may be represented using units of the network abstraction layer (NAL) standard.

The data section 4062 may include specifications such as a total number of a plurality of video frames to be displayed, and a frame rate in which the video frames are to be displayed (e.g., 0 to 25 frames per second).

It is noted that, the list of video frames includes the plurality of video frames that are to be displayed, such as the intermediate frame(s) and the end frame. Other states of the slide between the intermediate frames (e.g., states during an animation) may also be encoded as video frames.

In addition, the end frame is configured to be a last one of the video frames in each of the slide box elements 406 to be displayed.

For one slide box element 406, when the video frames that have been decoded and displayed add up to the total number specified in the data section 4062, the video corresponding to the video container file 400 halts to illustrate the end state of the slide. The video corresponding to the video container file 400 may be configured to terminate in case that only one slide exists, or that a last one of the slides has been displayed. On the other hand, the video corresponding to the video container file 400 may be configured to pause, and await user control operation before continuing to move onto the next slide. Alternatively, the slide box element 406 may contain a command such that when the end frame (in the form of an IDR frame or an IRAP frame) or an intermediate frame is detected by a decoding module, the video corresponding to the video container file 400 is paused.

The frame rate dictates the speed in which the video frames are displayed. In the case that the frame rate is set as zero, when playing the video container file 400, only one video frame is displayed, and a user control operation is required to advance to a next one of the video frames.

In one embodiment, one of the images, which may correspond with any arbitrary state of the slide, is specifically encoded as an additional intra frame and stored in the slide box element 406 to serve as one of the video frames. The additional intra frame is different from the end frame (i.e., the last one of the video frames , which is also an intra frame) or the intermediate frame (s), which, when displayed, pauses the video corresponding to the video container file 400 and require a user control operation to resume playing. That is to say, the additional intra frame does not interrupt the playing/streaming of the video container file 400.

In this manner, the resultant video container file 400 allows for intra-only bit streams, that is, streaming of the video container file 400 involves only the intra frames, and which involves lower encoding complexity.

In one embodiment, the slide box element 406 further contains a chapter marker associated with the end frame, so as to allow a quick navigation to the end frame. For example, the user may enter a specific user operation such as fast forward, rewind, or "jump" to a selected slide, in order to enable the end frame to be immediately displayed regardless of the progress of the playing of the video container file 400.

In one embodiment, each slide box element 406 further includes a comment section that has plain text originally contained in the corresponding slide of the slideshow. Specifically, the plain text may be the text included in a comment section of the slideshow, and can be optionally chosen to appear or not to appear in the video container file 400 thus generated. For example, a switch may be provided for the user to switch between displaying and not displaying the plain text during the playing/streaming of the video container file 400.

In an alternative embodiment, the video container file 400 is generated such that metadata included in the video container file 400 are contained in one element preceding the slide box element 406. In such embodiment, all of the video frames are decoded and buffered during the playback of the video corresponding to the video container file 400.

Additionally, each slide box element 406 may contain a lower resolution version of the corresponding slide (e.g., a thumbnail) as shown in Figure 5. This may be the last and/or intermediate frames of the slide box element 406. The lower resolution version of the slide may be encoded within a different layer, or may be encoded by referencing to a different sequence parameter identifier (VPS/SPS/PPS). The lower resolution version of the slide can be inter predicted or intra predicted. However, if the lower resolution version of the final representation of the slide is intra predicted, efficient extraction and visualization can be realized.

In another embodiment, as opposed to the aforementioned solution, a system layer metadata format may be designed, in which all of the above elements are combined in one syntax element preceding the elementary video stream. The application then decodes and buffers all the frames and defines functionality based on the metadata description in the syntax element. In this embodiment, all frames should be buffered during the playback of the video, and therefore may require a relatively larger buffer size.

After the video container file 400 is generated, the processor 102 may output the video container file 400. For example, the processor 102 may transmit the video container file 400 to the client-end electronic device 110 that initially requested the video container file 400.

After receiving the video container file 400, the client-end electronic device 110 may be capable of decoding the video container file 400 using known decoding tools/techniques, and displaying the content in the video container file 400 using a display device. It is noted that, in decoding the video container file 400, the client-endelectronic device 110 is not required to decode the video frames in the exact order in which the video frames are arranged in the slide box element (s) 406. For example, an intra frame may be decoded before other video frames that reference the intra frame, but that are precede the intra frame in arrangement.

The user control operation may be inputted to interact with the video container file 400 using, for example, standard input devices (e.g., a mouse, a keyboard, etc.) or a custom remote controller, an exemplary operation interface of which is shown in Figure 6.

The remote controller may include a keypad having a number of buttons to allow various user control operations.

Note that those video frames including the intermediate frame (s) and the end frame, and excluding the additional intra frame (corresponding to an image of an arbitrary state of a slide) define control points in the streaming/playing of the video corresponding to the video container file 400. Herein, a control point corresponding to an intermediate frame is referred to as an intermediate control point, and a control point corresponding to an end frame is referred to as an end control point.

Referring to Figure 6, for example, a numeric part of the keypad may allow the user to instantly jump to a point of streaming of the video container file 400 that corresponds to the end frame of a specified slide, i.e., to jump to the end control point corresponding to the specified slide. Aclickof a play button instructs the client-end electronic device 110 to play the video corresponding to the video container file 400 until a next control point that corresponds to a next frame, which may be an intermediate frame or an end frame. A click of a fast forward button instructs the client-end electronic device 110 to jump from a current control point in the video container file 400 to a next end control point that corresponds to the next end frame. A click of a rewind button instructs the client-end electronic device 110 to jump from the current control point in the video container file 400 to a previous control point, which may be an intermediate control point or an end control point. A click of a backward jump instructs the client-end electronic device 110 to jump to a previous end control point. A show/hide comment button instructs the client-end electronic device 110 to display/not display the comment contained in the video container file 400.

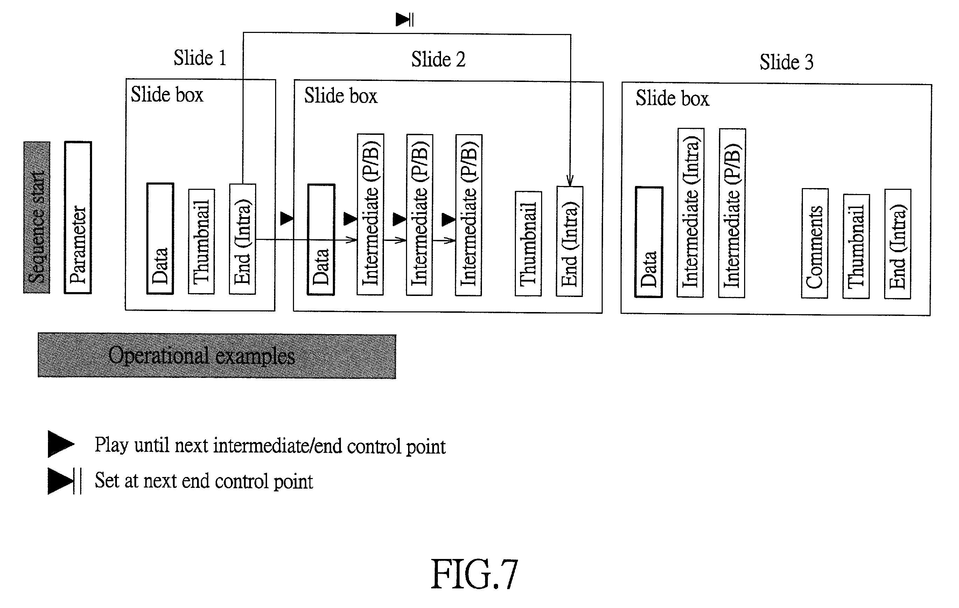

Figure 7 illustrates exemplary user control operations available. Starting with the end frame of Slide 1, when the play button is clicked, the client-end electronic device 110 plays the video corresponding to the video container file 400 until a next intermediate control point (as indicated by an arrow starting from "End (Intra)"of Slide 1 to the first "Intermediate (P/B)" of Slide 2) . A subsequent click of the play button allows the client-end electronic device 110 to play the video container file 400 until a next intermediate control point (as indicated by an arrow starting from the first "Intermediate (P/B)"to the second"Intermediate (P/B)"), and so forth.

On the other hand, when the fast forward button is clicked, the video playbacked by the client-end electronic device 110 jumps to the next end control point (as indicated by an arrow starting from "End (Intra)" of Slide 1 to "End (Intra)" of Slide 2).

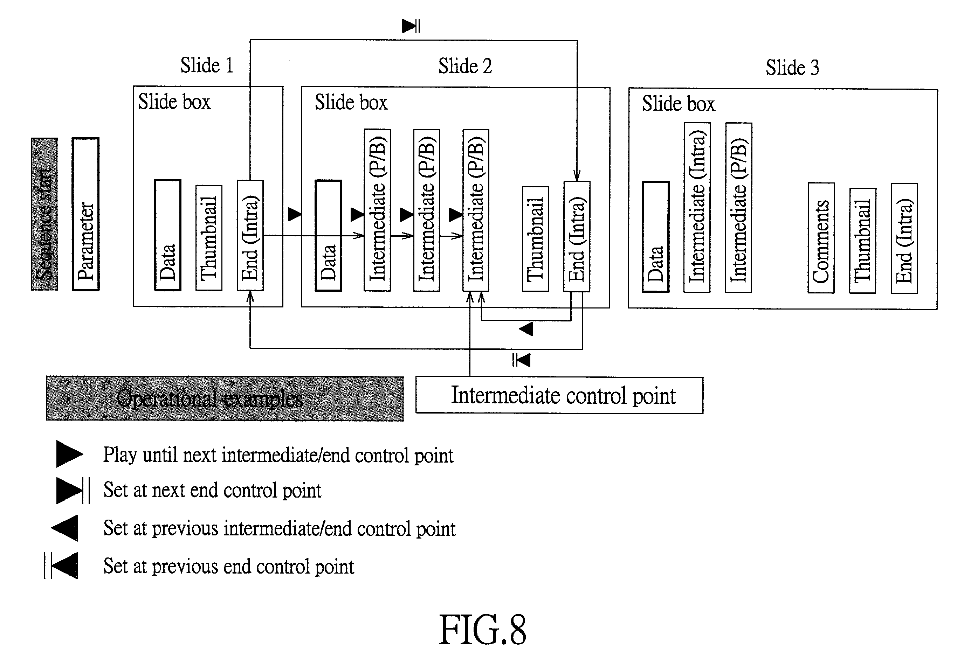

Figure 8 illustrates some more exemplary user control operations, specifically, the rewind operation (as indicated by an arrow starting from "End (Intra)" of Slide 2 back to the last "Intermediate (P/B)" of Slide 2) and the backward jump (as indicated by an arrow starting from the "End (Intra)" of Slide 2 back to the "End (Intra)" of Slide 1) operation.

To sum up, embodiments of the disclosure provide a new method for converting a slideshow, which the client-end electronic device 110 may not be able to properly display without the corresponding software, into a video container file 400 that can generally be played by various electronic devices. By instructing the client-end electronic device 110 to stop playing at each of the intermediate control points and the end control points, the resulting video container file 400 may be played and perceived as an actual slideshow. It is noted that the frame rate in which the video frames of the video container file 400 are to be played can be specified by the user, depending on the properties of the original slideshow.

By encoding an image of an end state of each of the slide in the slideshow as an intra frame, the video container file 400 generated by the method as described in the disclosure allows the specific operation (as shown in Figures 7 and 8) to be processed with more efficiency.

It is noted that, when the video container file 400 is being played in a trick mode (a playing mode that during fast forward and rewind, only a subset of video frames are sequentially displayed), the video container file 400 generated by the method as described in the disclosure may be relatively simpler for the computing device 100 to process, since states other than the end state of the slides are not required to be decoded during the trick mode. This in turn results in simpler decoding complexity for the client-end electronic device 110.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding various inventive aspects.

## Claims

1. A method for converting a slideshow into a video, the method being implemented by a processing unit (102), and **characterized by** the steps of:
receiving a slideshow that includes at least one slide, the at least one slide including at least one preset dynamic operation which, when activated, implements at least one presentation of visual feedback on the at least one slide;
identifying an end state of the at least one slide, the end state indicating a state in which the at least one presentation of visual feedback on the at least one slide has been completed;
encoding an image of the end state of the at least one slide, and storing the image thus encoded as an end frame, the end frame being an intra frame; and
generating a video container file (400) corresponding to the video, the video container file (400) including data regarding at least the end frame.

2. The method of Claim 1, **characterized in that** the video container file (400) generated by the processing unit (102) includes:
a sequence start element (402) containing system layer information;
a video parameter element (404) containing a number of video parameter sets associated with a decoding process of the video container file (400); and
at least one slide box element (406) corresponding to the at least one slide and containing the end frame.

3. The method of Claim 2, **characterized in that** the system layer information contained in the sequence start element (402) includes:
a commentary flag indicating whether a commentary is allowed to be incorporated in the video;
a transition flag indicating whether a transition operation is allowed to be incorporated in the video;
a maximum scale factor allowed for upscaling the video corresponding to the video container file (400); and
a list of allowed control operations associated with control of playback of the video.

4. The method of any one of Claims 2 and 3, **characterized in that** the video parameter sets contained in the video parameter element (404) includes a video parameter set (VPS), a sequence parameter set (SPS), and a picture parameter set (PPS).

5. The method of any one of Claims 2 to 4, **characterized in that** the at least one slide box element (406) of the video container file (400) includes information regarding:
a total number of a plurality of video frames in the at least one slide box element (406) to be displayed; and
a frame rate in which the video frames are to be displayed.

6. The method of Claim 5, **characterized in that** the at least one slide box element (406) of the video container file (400) further contains the plurality of video frames that are to be displayed, and the end frame is configured to be a last one of the video frames to be played.

7. The method of any one of Claims 1 to 6, the method further **characterized by**, before the step of generating a video container file (400), the steps of:
identifying at least one intermediate state of the at least one slide that precedes the end state of the at least one slide and that is associated with completion of at least another presentation of visual feedback on the at least one slide; and
encoding at least one image of the at least one intermediate state of the at least one slide, and storing the at least one image thus encoded as at least one intermediate frame.

8. The method of Claim 7, **characterized in that** when the at least one intermediate states includes aplurality of intermediate states and the at least one image includes a plurality of images, at least one of the images of the plurality of intermediate states associated with the at least one slide is encoded and stored as an intra frame.

9. The method of any one of Claims 5 to 8, **characterized in that** the at least one slide box element (406) of the video container file (400) further includes a chapter marker associated with at least the end frame, so as to allow a quick navigation to the end frame.

10. The method of any one of Claims 5 to 9, **characterized in that** the at least one slide box element (406) of the video container file (400) further includes a comment section that has plain text originally contained in the at least one slide of the slideshow.

11. The method of any one of Claims 5 to 10, **characterized in that** the at least one slide box element (406) of the video container file (400) further includes a thumbnail of the at least one slide of the slideshow, which is encoded and stored as a video frame.

12. The method of any one of Claims 1 to 11, **characterized in that** the image of the end state of the at least one slide is encoded using H.264 standard, and stored as an instantaneous decoding refresh (IDR) frame.

13. The method of any one of Claims 1 to 12, **characterized in that** the image of the end state of the at least one slide is encoded using H.265 standard, and stored as an intra random access point (IRAP) frame.
